# EUROPÄISCHE PATENTSCHRIFT

(11) **EP 1 670 661 B1**
(45) Veröffentlichungstag und Bekanntmachung des Hinweises auf die Patenterteilung: **12.12.2007**
(21) Anmeldenummer: 04790152.5
(22) Anmeldetag: 06.10.2004
(51) Int. Cl.: B60K 23/08

(54) **STEUERSYSTEM FÜR EIN ZUMINDEST ZEITWEISE VIERRADGETRIEBENES KRAFTFAHRZEUG**
CONTROL SYSTEM FOR AN AT LEAST TEMPORARILY FOUR-WHEEL DRIVEN MOTOR VEHICLE
SYSTEME DE COMMANDE POUR VEHICULES A MOTRICITE AU MOINS TEMPORAIREMENT INTEGRALE

(30) Priorität: 08.10.2003 DE 10346673
(43) Veröffentlichungstag der Anmeldung: 21.06.2006
(73) Patentinhaber: Bayerische Motoren Werke Aktiengesellschaft, 80809 München (DE)
(72) Erfinder: HOPPER, Thomas, 80796 München (DE); BILLIG, Christian, 80939 München (DE)
(86) Internationale Anmeldenummer: PCT/EP2004/011168
(87) Internationale Veröffentlichungsnummer: WO 2005/035297

(56) Entgegenhaltungen:
- EP-A- 0 319 830
- EP-A- 1 203 687
- EP-A- 1 270 305
- WO-A-02/18814

## Beschreibung

Die Erfindung bezieht sich auf ein Steuersystem für ein zumindest zeitweise vierradgetriebenes Kraftfahrzeug nach dem Oberbegriff des Patentanspruchs 1.

Derartige Steuersysteme sind beispielsweise in der DE 100 54 023 A1 beschrieben. Bekannt ist demnach eine Drehmomentverteilungseinrichtung zum Verändern des Drehmomentverteilungsverhältnisses zwischen den Rädern der Vorderachse und den Rädern der Hinterachse durch entsprechende Steuerung einer Reibungskupplung als Längssperre (Übertragungskupplung). Durch die Festlegung eines Drehmomentverteilungsverhältnisses kann das Fahrverhalten eines Fahrzeuges erheblich beeinflusst werden. Der Gegenstand der DE 100 54 023 A1 beschäftigt sich dabei insbesondere mit der Fahrdynamik bei Kurvenfahrt.

Im Folgenden werden diesbezüglich verallgemeinernd als primäre Antriebsräder die permanent mit der Antriebseinheit verbundenen Räder und als sekundäre Antriebsräder die über die Übertragungskupplung bedarfsweise mit der Antriebseinheit verbindbaren Räder bezeichnet.

Es ist Aufgabe der Erfindung, ein Steuersystem eingangs genannter Art im Hinblick auf die Stellgenauigkeit der Übertragungskupplung zu verbessern.

Diese Aufgabe wird durch die Merkmale des Patentanspruchs 1 gelöst. Vorteilhafte Weiterbildungen sind die Gegenstände der abhängigen Patentansprüche.

Der Erfindung liegt die Erkenntnis zugrunde, dass bei einem neuen System die Kennlinie in der Steuereinheit, durch die einem Soll-Kupplungsmoment ein Verstellweg zugeordnet wird, relativ genau zu einem tatsächlichen Kupplungsmoment führt, das dem Soll-Kupplungsmoment entspricht. Bei einem älteren System könnte derselbe Verstellweg jedoch zu einem tatsächlichen Kupplungsmoment führen, das kleiner als das Soll-Kupplungsmoment ist. Dies kann erkannt werden, wenn ein Verstellweg vorgegeben wird, der bei einem neuen System zu einem voll gesperrten oder gar übersperrten Zustand führen würde, tatsächlich jedoch nur zu einem teilgesperrten Zustand führt. Der teilgesperrte Zustand erzeugt ein Schlupfen der Übertragungskupplung, was insbesondere durch die gemessene oder berechnete Differenz zwischen der Winkelgeschwindigkeit der Antriebswelle zur Vorderachse und der Winkelgeschwindigkeit der Antriebswelle zur Hinterachse von der Steuereinheit erkannt werden kann.

Vorzugsweise wird diese Schlupfplausibilitätsüberwachung mittels der ohnehin vorhandenen Raddrehzahlsensoren bzw. Radwinkelgeschwindigkeitssensoren durchgeführt. Dabei kann die Genauigkeit der Diagnose erhöht werden, wenn sie bei Betriebsbedingungen durchgeführt wird, durch die sichergestellt ist, dass möglichst kein Radschlupf entstehen kann außer durch eine Stellungenauigkeit der Übertragungskupplung bzw. deren Aktuator.

Der Vorteil der Erfindung liegt in der Diagnose der Stellgenauigkeit ohne zusätzlicher Sensorik.

In der Zeichnung ist ein Ausführungsbeispiel der Erfindung dargestellt. Es zeigt
- Fig. 1: schematisch ein zeitweise vierradgetriebenes Fahrzeug mit einer über eine Steuereinheit einstellbaren Übertragungskupplung am Beispiel eines grundsätzlich hinterradangetriebenen Kraftfahrzeugs mit über eine Übertragungskupplung zuschaltbarem Vorderradantrieb und
- Fig. 2: ein Beispiel für eine ursprünglich abgelegte (durchgezogen dargestellte) und eine korrigierte (gestrichelt dargestellte) Kennlinie zur Zuordnung eines vorgegebenen Soll-Kupplungsmoments zu einem Verstellweg des Aktuators.

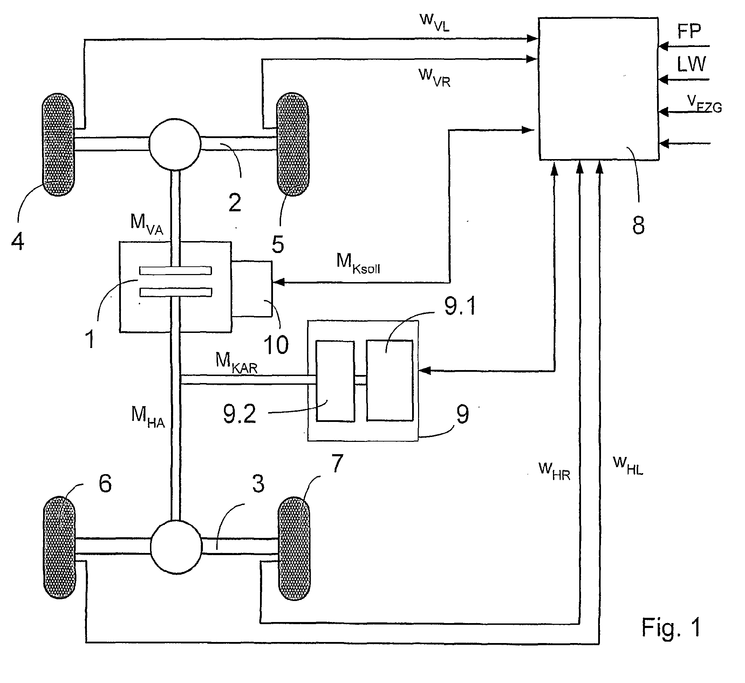

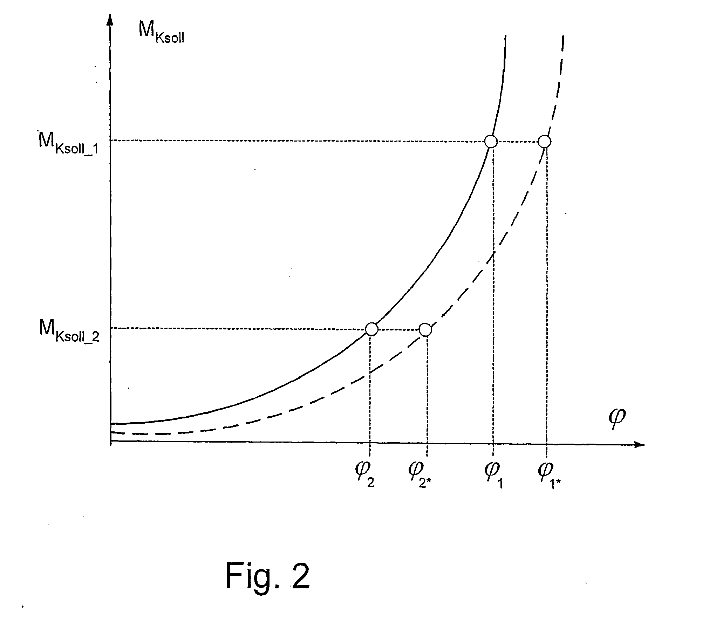

In Figur 1 ist ein zeitweise vierradgetriebenes Fahrzeug in Form eines grundsätzlich hinterradangetriebenen Kraftfahrzeugs mit bedarfsweise über eine Übertragungskupplung 1 zuschaltbarem Vorderradantrieb dargestellt. Die Übertragungskupplung 1 ist über eine Steuereinheit 8 einstellbar. Die Steuereinheit 8 kann ein ausgelagertes Zusatzsteuergerät 10, das beispielsweise das vorgegebene Soll-Kupplungsmoment M_{Ksoll} in einen Strom zur Ansteuerung der Verstelleinheit der Übertragungskupplung 1 umsetzt, enthalten. Dabei wird vorzugsweise eine Kennlinie in der Steuereinheit 8 bzw. im Zusatzsteuergerät 10 (wenn vorhanden) abgespeichert, die einem Soll-Kupplungsmoment M_{Ksoll} einen definierten Verstellweg ϕ des Aktuators zuordnet (vgl. Fig. 2, durchgezogene Linie).

Bei einem Fahrzeug nach Fig. 1 wird mit offener Übertragungskupplung 1 das gesamte Drehmoment (Gesamt-Antriebsmoment M_{KAR}) der Antriebseinheit 9, vorzugsweise bestehend aus einer Brennkraftmaschine 9.1, einem Getriebe 9.2 und mindestens einem Antriebssteuergerät (hier nicht eigens dargestellt), auf die Räder 6 und 7 der Hinterachse 3 übertragen. Hier sind die Hinterräder 6 und 7 die primären Antriebsräder, da sie permanent mit der Antriebseinheit 9 verbunden sind. Mit zunehmendem Kupplungsmoment an der Übertragungskupplung 1 treibt die Antriebseinheit 9 auch die Räder 4 und 5 der Vorderachse 2 an. Somit sind die Vorderräder 4 und 5 die sekundären Antriebsräder.

Zur variablen Drehmomentverteilung bzw. zur Ermittlung eines vorzugebenden Soll-Kupplungsmoments M_{Ksoll} erfasst die Steuereinheit 8 zu weiteren Eingangssignalen hinzu insbesondere die Raddrehzahlen oder Radwinkelgeschwindigkeiten w_{VL}, w_{HL}, w_{VR}, w_{HR} aller Räder 4, 5, 6, 7. Weiterhin erfasst oder ermittelt die Steuereinheit 8 hierzu beispielsweise die Fahrzeuggeschwindigkeit v_{FZG}, den Lenkwinkel LW und den Fahrpedalwert FP. Für die erfindungsgemäße Diagnose werden die Winkelgeschwindigkeit der Antriebswelle zur Vorderachse w_{vA} sowie die Winkelgeschwindigkeit der Antriebswelle zur Hinterachse w_{HA} aus den ohnehin erfassten Radwinkelgeschwindigkeiten w_{VL}, w_{HL}, w_{VR}, w_{HR} berechnet. Wird in der Steuereinheit 8 bzw. im Zusatzsteuergerät 10 eine Differenz zwischen den Winkelgeschwindigkeiten w_{VA} und w_{HA} erkannt, liegt ein Schlupfen der Übertragungskupplung 1 vor.

Das Gesamt-Antriebsmoment M_{KAR} wird abhängig vom vorgegebene Soll-Kupplungsmoment M_{Ksoll} bzw. abhängig vom über die Kennlinie in Fig. 2 aus dem Soll-Kupplungsmoment M_{Ksoll} resultierenden eingestellten Verstellweg ϕ des Aktuators der Übertragungskupplung 1 in ein von der Vorderachse übertragenes Antriebsmoment M_{VA} und in ein von der Hinterachse übertragenes Antriebsmoment M_{HA} aufgeteilt. Das tatsächlich eingestellte Kupplungsmoment M_{KUPP} entspricht im teilgesperrten Zustand dem von der Vorderachse übertragenen Antriebsmoment M_{VA}.

Von der Steuereinheit 8 bzw. 10 wird erfindungsgemäß ein Verstellweg ϕ vorgegeben, der gemäß der genannten Kennlinie zu einem zumindest voll gesperrten Zustand der Übertragungskupplung 1 führen müsste; d.h. die Übertragungskupplung dürfte, wenn alles in Ordnung ist, nicht schlupfen. Danach wird von der Steuereinheit 8 bzw. 10 geprüft, ob auch tatsächlich kein Schlupfen der Übertragungskupplung 1 auftritt. Dazu wird, wie oben bereits erwähnt, vorzugsweise die Differenz zwischen den Winkelgeschwindigkeiten w_{VA} und w_{HA} betrachtet. Ist diese Differenz zumindest nahezu Null, wird die abgespeicherte Kennlinie (z. B. Fig. 2, durchgezogene Linie, ϕ₁ zu M_{Ksoll_1} und ϕ₂ zu M_{Ksoll_2}) beibehalten. Wird jedoch ein Schlupfen erkannt und stellt damit also die Übertragungskupplung 1 zu wenig Moment, wird die Kennlinie im Sinne einer grundsätzlichen Momenterhöhung bzw. im Sinne einer Vergrößerung des Verstellweges ϕ bei gleichem Soll-Kupplungsmoment M_{Ksoll} korrigiert (z. B. Fig. 2, gestrichelte Linie, ϕ₁* zu M_{Ksoll_1} und ϕ₂* zu M_{Ksoll_2}).

Vorzugsweise wird der gemäß der Kennlinie dem zumindest voll gesperrten Zustand entsprechende Verstellweg ϕ bzw. die erfindungsgemäße Schlupfplausibilitätsüberwachung nur bei definierten Betriebsbedingungen vorgegeben, die insbesondere nicht Ursache für das Auftreten von Schlupf an einem oder mehreren Rädern sein können. Zumindest folgende Betriebsbedingungen sind hierfür besonders vorteilhaft:
- Überschreiten eines vorgegebenen Fahrzeuggeschwindigkeits-Grenzwertes (v_{FZG}>v_{grenz}) (Hierdurch wird im Wesentlichen ein homogener Reibwert sichergestellt; denn Reibwertunterschiede zwischen den Achsen werden mit steigender Fahrzeuggeschwindigkeit hochfrequenter. Liegen sie über der Antriebsstrang-Eigenfrequenz sind sie für die erfindungsgemäße Schlupfplausibilitätsüberwachung vernachlässigbar.)
- Vorliegen gleicher Reifenlängssteifigkeiten (k) an den Rädern der Vorderachse und den Rädern der Hinterachse (Betrachtet man die bekannten Schlupfkurven für die Vorderachse und für die Hinterachse soll der lineare Bereich der Schlupfkurve vorliegen, damit ein stabiles Laufen aller Räder ohne Schlupf sichergestellt wird.)
- Geradeausfahrt (=> kein kinematischer Schlupf durch Kurvenfahrt)
- Konstantfahrt (=> keine statischen und dynamischen Achlastverlagerungen)
- Fahrt in der Ebene (=> keine statischen und dynamischen Achlastverlagerungen) und/oder
- Vorliegen eines zumindest im Wesentlichen eingeschwungenen Zustands des Systems. (Insbesondere sollten die Gradienten der Radschlüpfe zumindest nahezu Null sein.)

## Patentansprüche

1. Steuersystem für ein zumindest zeitweise vierradgetriebenes Kraftfahrzeug mit einer Steuereinheit (8, 10), mittels der das Antriebsmoment einer Antriebseinheit (9) auf primäre Antriebsräder (6), die permanent mit der Antriebseinheit verbunden sind, und auf sekundäre Antriebsräder (4), die bedarfsweise mit der Antriebseinheit verbindbar sind, variabel verteilbar ist, wobei zur Verteilung des Antriebsmoments ein Kupplungsmoment einer zwischen der Antriebseinheit (9) und den sekundären Antriebsrädern (4) angeordneten Übertragungskupplung (1) mittels der Steuereinheit (8, 10) eingestellt wird, **dadurch gekennzeichnet, dass** die Steuereinheit (8, 10) derart ausgestaltet ist, dass über eine Kennlinie einem Soll-Kupplungsmoment (M_{Ksoll}) ein Verstellweg (ϕ) für den die Übertragungskupplung (1) betätigenden Aktuator zugeordnet wird und dass von der Steuereinheit (8, 10) bei der Vorgabe eines Verstellwegs (ϕ), der gemäß der Kennlinie zu einem zumindest voll gesperrten Zustand der Übertragungskupplung (1) führen müsste, geprüft wird, ob ein Schlupfen der Übertragungskupplung (1) auftritt.

2. Steuersystem nach Patentanspruch 1, **dadurch gekennzeichnet, dass** die Kennlinie bei Schlupfen der Übertragungskupplung (1) im Sinne einer Vergrößerung des Verstellwegs (ϕ) bei gleichem Soll-Kupplungsmoment (M_{Ksoll}) korrigiert wird.

3. Steuersystem nach Patentanspruch 1 oder 2, **dadurch gekennzeichnet, dass** der gemäß der Kennlinie dem zumindest voll gesperrten Zustand entsprechende Verstellweg nur zu definierten Betriebsbedingungen vorgegeben wird, die nicht Ursache für das Auftreten von Schlupf an einem oder mehreren Rädern sein können.

4. Steuersystem nach Patentanspruch 3, **dadurch gekennzeichnet, dass** eine Betriebsbedingung das Überschreiten eines vorgegebenen Fahrzeuggeschwindigkeits-Grenzwertes (v_{FZG}>v_{grenz}) ist.

5. Steuersystem nach Patentanspruch 3 oder 4, **dadurch gekennzeichnet, dass** eine Betriebsbedingung das Vorliegen gleicher Reifenlängssteifigkeiten (k) an den Rädern der Vorderachse und den Rädern der Hinterachse ist.

6. Steuersystem nach einem der Patentansprüche 3 bis 5, **dadurch gekennzeichnet, dass** eine Betriebsbedingung zumindest im Wesentlichen Geradeausfahrt ist.

7. Steuersystem nach einem der Patentansprüche 3 bis 6, **dadurch gekennzeichnet, dass** eine Betriebsbedingung zumindest im Wesentlichen Konstantfahrt ist.

8. Steuersystem nach einem der Patentansprüche 3 bis 7, **dadurch gekennzeichnet, dass** eine Betriebsbedingung zumindest im Wesentlichen Fahrt in der Ebene ist.

9. Steuersystem nach einem der Patentansprüche 3 bis 8, **dadurch gekennzeichnet, dass** eine Betriebsbedingung das Vorliegen eines zumindest im Wesentlichen eingeschwungenen Zustands des Systems ist.

## Claims

1. A control system for an at least temporarily four wheel-driven motor vehicle with a control unit (8, 10), by means of which the drive torque of a drive unit (9) can be variably distributed to primary drive wheels (6), which are permanently connected to the drive unit, and to secondary drive wheels (4), which can be connected if necessary to the drive unit, wherein for distribution of the drive torque, a coupling torque of a transmission clutch (1) arranged between the drive unit (9) and the secondary drive wheels (4) is adjusted by means of the control unit (8, 10), **characterised in that** the control unit (8, 10) is configured in such a way that an adjustment path (ϕ) for the actuator actuating the transmission clutch (1) is associated via a characteristic curve with a desired clutch torque (M_{Cdesired}) and **in that** the control unit (8, 10) checks whether slip of the transmission clutch (1) occurs when a displacement path (ϕ) is specified that should result in an at least fully locked state of the transmission clutch (1) in accordance with the characteristic curve.

2. A control system according to claim 1, **characterised in that** the characteristic curve is corrected for slip of the transmission clutch (1) in the sense of an extension of the displacement path (ϕ) at the same desired clutch torque (M_{Cdesired}).

3. A control system according to claim 1 or 2, **characterised in that** the displacement path corresponding to the at least fully locked state in accordance with the characteristic curve is predetermined only for defined operating conditions which cannot be the cause of the occurrence of slip on one or more wheels.

4. A control system according to claim 3, **characterised in that** an operating condition is the exceeding of a predetermined vehicle speed limit value (v_{VEH} > vₗᵢₘᵢₜ).

5. A control system according to claim 3 or 4, **characterised in that** an operating condition is the presence of equal tyre longitudinal rigidities (k) at the wheels of the front axle and the wheels of the rear axle.

6. A control system according to any one of claims 3 to 5, **characterised in that** an operating condition is at least substantially straight-ahead driving.

7. A control system according to any one of claims 3 to 6, **characterised in that** an operating condition is at least substantially constant driving.

8. A control system according to any one of claims 3 to 7, **characterised in that** an operating condition is at least substantially level driving.

9. A control system according to any one of claims 3 to 8, **characterised in that** an operating condition is the presence of an at least substantially steady-state condition of the system.

## Revendications

1. Système de commande pour un véhicule automobile à motricité au moins temporairement intégrale, comportant une unité de commande (8, 10) permettant de répartir le couple d'entraînement d'une unité d'entraînement (9) de manière variable entre les roues primaires d'entraînement (6) reliées en permanence à l'unité d'entraînement, et les roues secondaires d'entraînement qui peuvent être au besoin reliées à l'unité d'entraînement, l'unité de commande (8, 10) règlant pour cela le couple d'un accouplement de transmission prévu entre les roues secondaires d'entraînement (4) et l'unité d'entraînement,
**caractérisé en ce que**
- l'unité de commande (8, 10) est configurée pour associer à l'aide d'une courbe caractéristique un couple d'accouplement de consigne (M_{Ksoll}), une course de réglage (ϕ) d'un actionneur commandant l'accouplement de transmission, et
- quand on a prédéfini une course de réglage (ϕ) qui, selon la courbe caractéristique devrait conduire à un état au moins totalement bloqué de l'accouplement de transmission (1), l'unité de commande (8, 10) examine s'il y a un glissement de l'accouplement de transmission (1).

2. Système de commande selon la revendication 1,
**caractérisé en ce que**
la courbe caractéristique, quand l'accouplement de transmission (1) glisse, est corrigée dans le sens d'une augmentation de la course de réglage (ϕ) pour le même couple d'accouplement de consigne (M_{Ksoll}).

3. Système de commande selon la revendication 1 ou 2,
**caractérisé en ce que**
la course de déplacement correspondant selon la courbe caractéristique à l'état au moins totalement bloqué est prédéfinie seulement pour des conditions de fonctionnement qui ne peuvent pas être la cause de l'apparition de glissement sur une ou plusieurs roues.

4. Système de commande selon la revendication 3,
**caractérisé en ce qu'**
une condition de fonctionnement est le dépassement d'une valeur limite de la vitesse du véhicule (v_{FZG} > v_{greuz}).

5. Système de commande selon la revendication 3 ou 4,
**caractérisé en ce qu'**
une condition de fonctionnement est que les pneus des roues de l'essieu avant et de l'essieu arrière aient la même rigidité longitudinale (k).

6. Système de commande selon une des revendications 3 à 5,
**caractérisé en ce qu'**
une condition de fonctionnement est que le véhicule circule au moins à peu près en ligne droite.

7. Système de commande selon une des revendications 3 à 6,
**caractérisé en ce qu'**
une condition de fonctionnement est que le véhicule circule au moins à une vitesse essentiellement constante.

8. Système de commande selon une des revendications 3 à 7,
**caractérisé en ce qu'**
une condition de fonctionnement est que le véhicule circule au moins sur une surface essentiellement plane.

9. Système de commande selon une des revendications 3 à 8
**caractérisé en ce qu'**
une condition de fonctionnement est que l'état du système ne soit essentiellement pas vibratoire.
